Europäisches Patentamt

European Patent Office

Office européen des brevets

(11) Publication number: **0 408 359 A1**

# EUROPEAN PATENT APPLICATION

(21) Application number: 90307632.1

(22) Date of filing: 12.07.90

(51) Int. Cl.5: **B29C 45/00,** B29C 45/17, A43B 13/18, //B29L31:50

(30) Priority: 12.07.89 GB 8915923

(43) Date of publication of application:
16.01.91 Bulletin 91/03

(84) Designated Contracting States:
AT BE CH DE DK ES FR IT LI NL SE

(71) Applicant: **Mott, Jonathan Christopher**
**Kippences Barn**
**Liss Hampshire, GU33 6LD(GB)**

(72) Inventor: **Mott, Jonathan Christopher**
**Kippences Barn**
**Liss Hampshire, GU33 6LD(GB)**

(74) Representative: **Stoole, Brian David**
**19 Bourne Firs Frensham Road**
**Farnham Surrey(GB)**

(54) Shoe soles.

(57) A method of making a sole for a shoe, particularly a sports shoe, comprises moulding the sole in one piece by an injection moulding process. A molten stream of plastics material, such as polyurethane or a synthetic rubber, is introduced into a mould having a cavity shaped to define the sole, and a gas such as helium is injected under pressure into the stream of plastics material just inside the mould cavity. The gas serves to pressurise the plastics material against the surface of the mould cavity and to create one or more cavities or hollow spaces within the thicker parts of the moulded sole.

## SHOE SOLES

This invention relates to soles for shoes, and is more particularly, but not exclusively, concerned with synthetic soles for sports shoes.

One known form of sports shoe has a synthetic sole provided with several air-filled cavities, which provide a cushion-like effect. However, to create the cavities, the sole is moulded in separate upper and lower halves, which mate in a plane generally parallel to the bottom surface of the sole, this plane passing through the middle of each cavity. The two halves are then bonded together, so creating the cavities, and then the upper of the shoe is bonded to the upper surface of the sole.

It is an object of the present invention to provide a method of making a shoe with a sole containing cavities, which is simpler and less expensive than the above described method of making the known sports shoe.

According to the present invention, there is provided a method of making a sole for a shoe, wherein the sole is moulded in one piece by an injection moulding process in which a molten stream of plastics material is introduced into a mould having a cavity shaped to define the sole, and wherein gas is injected under pressure into the stream of plastics material so as to flow therewith within the moulded cavity and pressurise the plastics material against the surfaces of the mould cavity, the pressure of said gas being maintained until the plastics material is self-supporting, whereby to form at least one cavity in the moulded sole.

The gas is preferably introduced into the molten stream of plastics material at one or more preselected points within the mould cavity whereat it is desired to produce a cavity in the moulded sole. Furthermore, the pressure of the gas is preferably maintained until after the plastics material has fully set, whereby the gas in the cavity or cavities in the moulded sole remains at an elevated pressure in the finished moulded sole.

The gas may advantageously be helium.

In a preferred implementation of the method of the invention, the sole is moulded onto the upper part of the shoe simultaneously with the moulding of the sole.

The invention will now be described, by way of example only, with reference to the accompanying drawings, of which:

Figures 1 and 2 show a first embodiment of a moulded shoe sole in accordance with the present invention;

Figures 3 to 5 show a second embodiment of a moulded shoe sole in accordance with the present invention;

Figures 6 to 8 show a third embodiment of a moulded shoe sole in accordance with the present invention; and

Figures 9 to 11 show a fourth embodiment of a moulded shoe sole in accordance with the present invention.

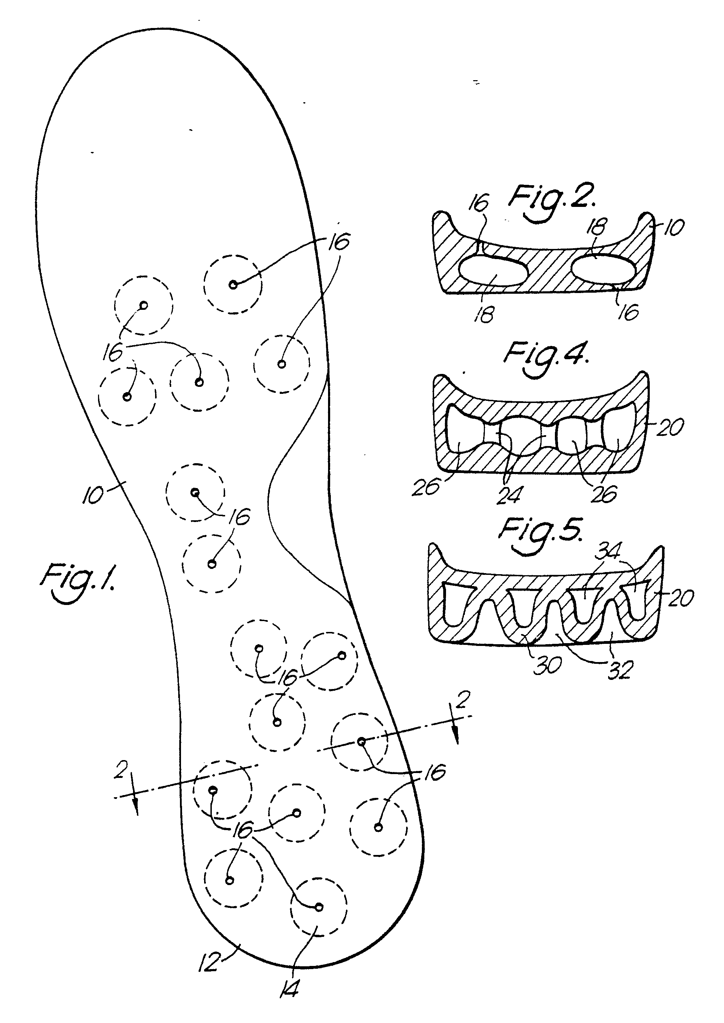

The shoe sole shown in Figures 1 and 2 is indicated generally at 10, and is moulded in one piece in a mould having a cavity shaped to define the sole. The cavity has a main inlet or sprue positioned in the heel 12 of the sole 10, in a position corresponding to that indicated at 14 in Figure 1, and a plurality of gas inlets in positions corresponding to those indicated at 16 in Figures 1 and 2. It will be noted that the inlets communicate with both the upper and lower surfaces of the sole 10.

To mould the sole 10, a suitable thermo-plastics material, eg a polyurethane plastics material or a plastics material of the synthetic rubber type, is injected in a molten stream into the mould via the aforementioned main inlet, and at the same time a predetermined amount of helium is injected under pressure via each of the aforementioned gas inlets. The pressurised injected gas serves not only to pressurise the plastics material against the internal surfaces of the mould cavity, but also to create internal cavities within the thicker parts of the moulded sole 10, as indicated 18 in Figure 2.

The pressure of the helium is maintained at least until the material in the mould is self-supporting, and the inlets by which it was injected are then plugged with further plastics material to seal the cavities. The helium is thus sealed in the cavities 18 at an elevated pressure, creating an effect in the finished moulded sole 10 rather like that of a pneumatic tyre.

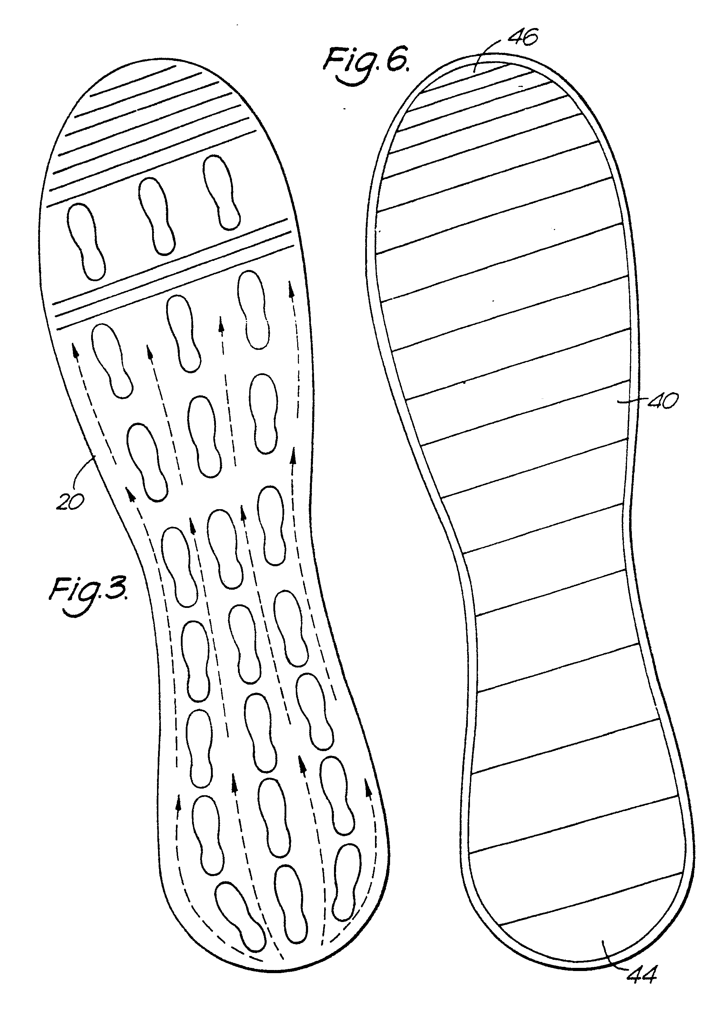

The shoe sole of Figures 3 to 5 is indicated generally at 20, and has a heel part 22 incorporating several preformed core members 24 (Figure 4). These core members 24 are moulded into the sole 20 during the moulding process, which is substantially as described in relation to the sole 10 of Figures 1 and 2, and creates cavities 26 around the core members. The main part 28 of the sole has a plurality of longitudinally extending ribs 30 separated by channels or grooves 32 (Figure 5), and longitudinally extending cavities are formed in the ribs by the moulding process. To achieve this, at least one gas inlet is provided in a respective position in the upper surface of the sole 20 opposite each rib 30: however, if desired, several gas inlets spaced along the length of the rib 30 may be provided.

The shoe sole of Figures 6 to 9 is indicated generally at 40, and has a plurality of ribs 42 extending transversely thereacross. The ribs 42 are moulded to have the appearance of circular-section ribs, which become progressively smaller from the heel 44 to the toe 46. At least the larger ones of the ribs 42 are rendered hollow by gas injection from the upper surface of the sole 40, as described in relation to the previous embodiment. Additionally, the mould for the sole 40 is arranged to have the lower periphery of the upper 48 of the shoe projecting sealingly into it, so that this periphery is moulded into the sole during the moulding process.

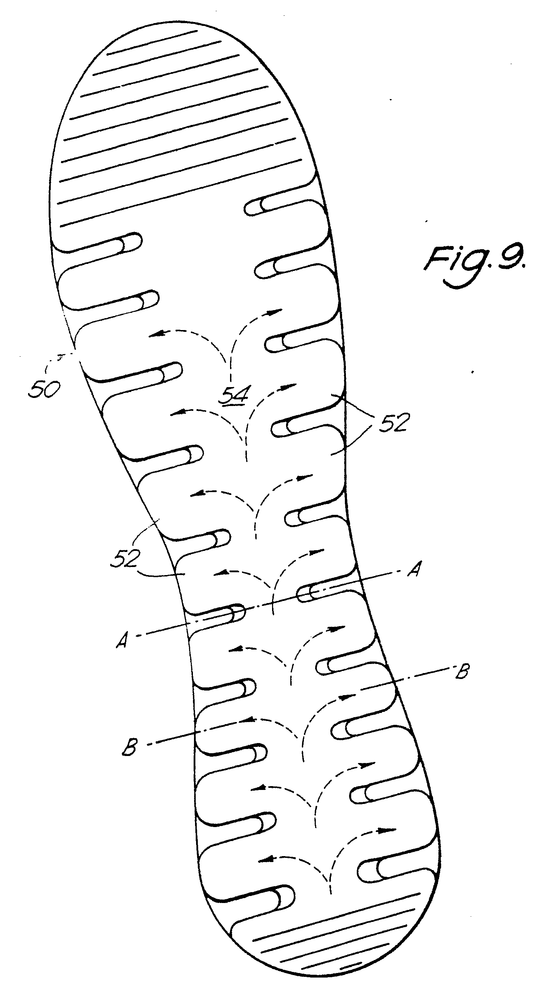

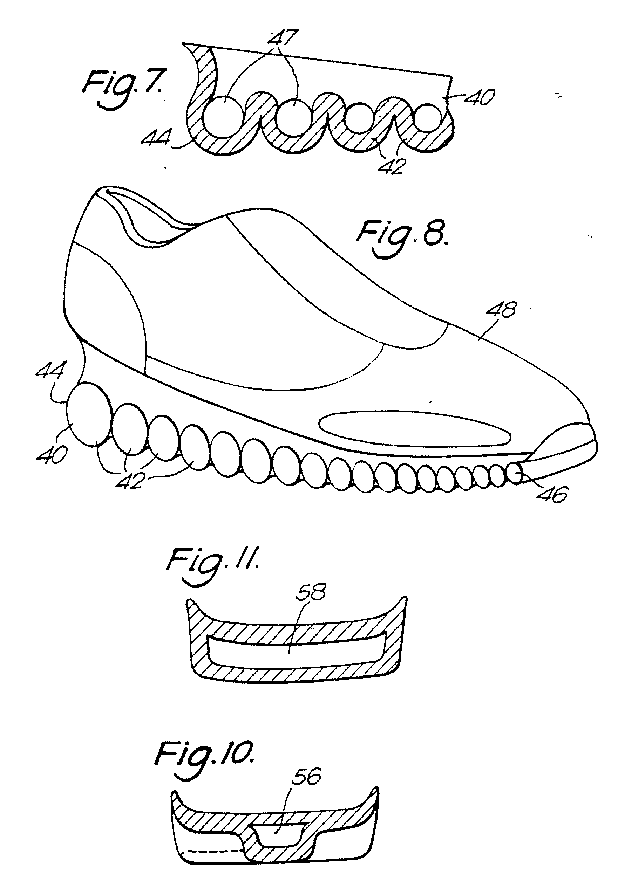

The shoe of Figures 9 to 11 is indicated generally at 50, and like the sole 40 of Figures 6 to 9, again has a plurality of transversely extending ribs 52. However, the ribs 52 are fairly uniformly spaced, and are disposed on each side of a central longitudinally extending spine 54. Again, the ribs 52 are rendered hollow by gas injection from the upper surface of the sole 50, in line with the spine 54: the cavities thus formed are shown at 56 in Figure 10 and at 58 in Figure 11.

Sports shoes incorporating the soles hereinbefore described have a springy, cushioned feel by virtue of the pressurised helium trapped in them, and are very comfortable and light to wear. They can be made relatively quickly, i.e. with a moulding process involving relatively few steps, and therefore relatively inexpensively.

The soles described hereinbefore can be used for shoes other than sports shoes, e.g. casual walking shoes.

Several modifications can be made to the described implementations of the invention. For example, the gas can be introduced into the molten plastics material before or as it enters the mould. And the process can be modified so that the gas creates a plastics foam as well as or instead of creating the relatively large cavities described.

## Claims

1. A method of making a sole for a shoe, wherein the sole is moulded in one piece by an injection moulding process in which a molten stream of plastics material is introduced into a mould having a cavity shaped to define the sole, and wherein gas is injected under pressure into the stream of plastics material so as to flow therewith within the mould cavity and pressurise the plastics material against the surface of the mould cavity, the pressure of said gas being maintained until the plastics material is self-supporting, whereby to form at least one cavity in the moulded sole.

2. A method as claimed in claim 1, wherein the gas is introduced into the molten stream of plastics material at one or more preselected points within the mould cavity whereat it is desired to produce a cavity in the moulded sole.

3. A method as claimed in claim 1 or claim 2, wherein the pressure of the gas is maintained until after the plastics material has set, whereby the gas in the cavity or cavities in the moulded sole remains at an elevated pressure in the finished moulded sole.

4. A method as claimed in any preceding claim, wherein the gas is helium.

5. A method as claimed in any preceding claim, wherein the sole is moulded onto the upper of the shoe simultaneously with the moulding of the sole.

6. A method of making a sole for a shoe, the method being substantially as herein described with reference to the accompanying drawings.

7. A shoe having a sole made by a method in accordance with any one of the preceding claims.

8. A shoe as claimed in claim 7, wherein the sole has a plurality of transversely extending ribs each containing a respective cavity.

9. A shoe as claimed in claim 7, wherein the sole has at least one longitudinally extending rib or spine containing at least one cavity.

Fig.1.

Fig.2.

Fig.4.

Fig.5.

Fig.6.

Fig.3.

Fig.9.

Fig. 7.

Fig. 8.

Fig. 11.

Fig. 10.

7

## DOCUMENTS CONSIDERED TO BE RELEVANT

EP 90307632.1

| Category | Citation of document with indication, where appropriate, of relevant passages | Relevant to claim | CLASSIFICATION OF THE APPLICATION (Int. Cl.5) |
|---|---|---|---|
| A | GB - A - 2 139 549 (HENDRY) * Totality * -- | | B 29 C 45/00 B 29 C 45/17 A 43 B 13/18/ //B 29 L 31:50 |
| A | GB - A - 2 202 181 (CINPRES) * Totality * -- | | |
| A | WO - A1 - 81/01 234 (VAN TILBURG) * Totality * -- | | |
| A | US - A - 4 670 995 (HUANG) * Totality * ---- | | |

TECHNICAL FIELDS
SEARCHED (Int. Cl.5)

A 43 B
B 29 C
B 29 D

The present search report has been drawn up for all claims

| Place of search | Date of completion of the search | Examiner |
|---|---|---|
| VIENNA | 29-10-1990 | MAYER |

EPO FORM 1503 03.82 (P0401)